# EUROPEAN PATENT APPLICATION

(11) **EP 4 277 351 A1**
(43) Date of publication of application: **15.11.2023**
(21) Application number: 21927667.2
(22) Date of filing: 09.12.2021
(51) Int. Cl.: H04W 36/08, H04W 36/18, H04W 48/08, H04W 48/16

(54) **WI-FI ACCESS METHOD AND RELATED DEVICE**

(30) Priority: 27.02.2021 CN 202110223766
(71) Applicant: Huawei Technologies Co., Ltd., Shenzhen, Guangdong 518129 (CN)
(72) Inventor: HUANG, Xian, Shenzhen, Guangdong 518129 (CN); LI, Jiqing, Shenzhen, Guangdong 518129 (CN)
(74) Representative: Pfenning, Meinig & Partner mbB
(86) International application number: PCT/CN2021/136776
(87) International publication number: WO 2022/179243

(57) **Abstract**

This application discloses a Wi-Fi access method. In an application scenario in which a terminal device is connected to dual-band Wi-Fi, the terminal device may obtain, from a radio access controller through an existing connection, information about all or some radio access devices in a same wireless local area network. In a scenario in which SSIDs of all radio access devices are different, when a physical position of the terminal device changes (the terminal device moves from a Wi-Fi coverage area of one radio access device to a Wi-Fi coverage area of another radio access device) or it is detected that a signal of another radio access device is relatively good, the terminal device can access the another radio access device in a password-free manner, to implement fast and smooth Wi-Fi roaming handover. A user does not need to connect to the radio access device in advance or enter information such as a user name and a password, thereby simplifying user operations and improving Wi-Fi roaming experience of the user.

## Description

This application claims priority to Chinese Patent Application No. 202110223766.6, filed with the China National Intellectual Property Administration on February 27, 2021 and entitled "WI-FIACCESS METHOD AND RELATED DEVICE", which is incorporated herein by reference in its entirety.

### TECHNICAL FIELD

This application relates to the field of communication technologies, and in particular, to a Wi-Fi access method and a related device.

### BACKGROUND

With the development of communication technologies, a wireless local area network (Wireless Local Area Network, WLAN) technology is used in many large areas (such as shopping malls, office buildings, and hotels) to implement wireless fidelity (Wireless Fidelity, Wi-Fi) and provide internet access services for users.

A Wi-Fi coverage area of a single radio access device is limited, and therefore a plurality of radio access devices (Access Point, AP) need to be deployed in a same WLAN. When a terminal device carried by a user roams between different radio access devices in the same wireless local area network, the terminal device needs to hand over to another radio access device to reconnect to Wi-Fi. In a scenario in which service set identifiers (Service Set Identifier, SSID) of all radio access devices are different, the user may need to enter information such as the SSIDs and passwords of all the radio access devices one by one to complete the handover to reconnect to Wi-Fi, which is relatively complex and causes poor user experience.

### SUMMARY

Embodiments of this application provide a Wi-Fi access method and a related device, so that a terminal device can implement smooth Wi-Fi roaming handover between different radio access devices, thereby improving user experience.

According to a first aspect, an embodiment of this application provides a Wi-Fi access method, applied to a communication system, where the communication system includes a terminal device and network devices, the network devices include a radio access controller, a first radio access device, a second radio access device, and a third radio access device, and the method includes: the terminal device establishes a first Wi-Fi connection to the first radio access device; the terminal device obtains, through the first Wi-Fi connection, dual connectivity information sent by the network devices; the terminal device sends first verification information to the network devices through the first Wi-Fi connection; the terminal device sends, to the network devices through the first Wi-Fi connection, a request for establishing a second Wi-Fi connection, where the request carries the first verification information; the terminal device establishes the second Wi-Fi connection to the second radio access device; when a first condition is met, the terminal device sends, to the network devices, a request for establishing a third Wi-Fi connection, where the request carries the first verification information; and when the first verification information is recorded by the network devices, the terminal device accesses the third radio access device in a password-free manner, and establishes the third Wi-Fi connection to the third radio access device, where the first Wi-Fi connection is a connection on a first Wi-Fi frequency band, and the second Wi-Fi connection and the third Wi-Fi connection are connections on a second Wi-Fi frequency band.

In the method according to the first aspect of the embodiments of this application, in an application scenario in which the terminal device connects to dual-band Wi-Fi, the terminal device may obtain information about all or some radio access devices in a same wireless local area network from the radio access controller through an existing connection (for example, 2.4 GHz Wi-Fi). In a scenario in which SSIDs of the radio access devices are different, the radio access controller may exchange information such as a MAC address of the terminal device with all or some radio access devices in the same wireless local area network; and when a physical position of the terminal device changes (the terminal device moves from a Wi-Fi coverage area of a radio access device to a Wi-Fi coverage area of another radio access device) or it is detected that a signal of another radio access device is relatively good, the terminal device can access the another radio access device in a password-free manner, to implement fast and smooth Wi-Fi (for example, 5 GHz Wi-Fi) roaming handover. A user does not need to connect to all radio access devices in advance or enter information such as a user name and a password, thereby simplifying user operations and improving user experience.

In a possible implementation, the first verification information is used to establish a connection on the second Wi-Fi frequency band.

In a possible implementation, the first radio access device is the same as or is different from the second radio access device.

In a possible implementation, that the terminal device sends, to the network devices, a request for establishing a third Wi-Fi connection specifically includes: the terminal device sends, to the radio access controller, the request for establishing the third Wi-Fi connection.

In a possible implementation, that the terminal device sends, to the network devices, a request for establishing a third Wi-Fi connection specifically includes: the terminal device sends, to the third radio access device, the request for establishing the third Wi-Fi connection.

In a possible implementation, that the first verification information is recorded by the network devices specifically includes: the first verification information is recorded by the radio access controller.

In a possible implementation, that the first verification information is recorded by the network devices specifically includes: the first verification information is recorded by the third radio access device.

In a possible implementation, the method further includes: the terminal device receives a first time sent by the network devices, and that the terminal device accesses the third radio access device in a password-free manner specifically includes: the terminal device accesses the third radio access device in a password-free manner within a range of the first time.

In a possible implementation, before the terminal device establishes the second Wi-Fi connection to the second radio access device, the method further includes: when the first verification information is recorded by the network devices, the terminal device accesses the second radio access device in a password-free manner.

In a possible implementation, before the terminal device establishes the second Wi-Fi connection to the second radio access device, the method further includes: the terminal device determines that the SSID of the second radio access device is included in the dual connectivity information.

In a possible implementation, before the terminal device establishes the third Wi-Fi connection to the third radio access device, the method further includes: the terminal device determines that the SSID of the third radio access device is included in the dual connectivity information.

In a possible implementation, that a first condition is met specifically includes: the terminal device detects that the terminal device enters a Wi-Fi coverage area of the third radio access device; or the terminal device detects that a Wi-Fi signal of the third radio access device is relatively good.

In a possible implementation, the first verification information is a MAC address of the terminal device.

According to a second aspect, an embodiment of this application provides a Wi-Fi access method, applied to a communication system, where the communication system includes a terminal device and network devices, the network devices include a radio access controller, a first radio access device, a second radio access device, and a third radio access device, a first Wi-Fi connection is established between the terminal device and the first radio access device, and the method includes: the network devices sends dual connectivity information to the terminal device through the first Wi-Fi connection, where a second Wi-Fi connection is further established between the terminal device and the second radio access device; the network devices receives, through the first Wi-Fi connection, first verification information sent by the terminal device; the network devices receive a request for establishing a third Wi-Fi connection that is sent by the terminal device, where the request carries the first verification information, and the request for establishing the third Wi-Fi connection is sent when a first condition is met; and when the first verification information is recorded by the network devices, the network devices allows the terminal device to access the third access device in a password-free manner, where the first Wi-Fi connection is a connection on a first Wi-Fi frequency band, and the second Wi-Fi connection and the third Wi-Fi connection are connections on a second Wi-Fi frequency band.

In a possible implementation, the first verification information is used to establish a connection on the second Wi-Fi frequency band.

In a possible implementation, the first radio access device is the same as or is different from the second radio access device.

In a possible implementation, that the network devices receive a request for establishing a third Wi-Fi connection that is sent by the terminal device specifically includes: the radio access controller receives the request for establishing the third Wi-Fi connection that is sent by the terminal.

In a possible implementation, that the network devices receive a request for establishing a third Wi-Fi connection that is sent by the terminal device specifically includes: the third radio access device receives the request for establishing the third Wi-Fi connection that is sent by the terminal device.

In a possible implementation, that the first verification information is recorded by the network devices specifically includes: the first verification information is recorded by the radio access controller.

In a possible implementation, that the first verification information is recorded by the network devices specifically includes: the first verification information is recorded by the third radio access device.

In a possible implementation, the method further includes: the network devices send a first time to the terminal device, and that the network devices allow the terminal device to access the third access device in a password-free manner specifically includes: the network devices allow the terminal device to access the third radio access device in a password-free manner within a range of the first time.

In a possible implementation, the dual connectivity information includes an SSID of the second radio access device.

In a possible implementation, the dual connectivity information includes an SSID of the third radio access device.

In a possible implementation, that a first condition is met specifically includes: the terminal device detects that the terminal device enters a Wi-Fi coverage area of the third radio access device; or the terminal device detects that a Wi-Fi signal of the third radio access device is relatively good.

In a possible implementation, the first verification information is a MAC address of the terminal device.

According to a third aspect, an embodiment of this application provides a terminal device, including one or more processors and one or more memories. The one or more memories are coupled to the one or more processors, the one or more memories are configured to store computer program code, the computer program code includes computer instructions, and when the one or more processors execute the computer instructions, the terminal device is enabled to perform the method according to any one of the first aspect or the possible implementations of the first aspect.

According to a fourth aspect, an embodiment of this application provides a network device, including one or more processors and one or more memories. The one or more memories are coupled to the one or more processors, the one or more memories are configured to store computer program code, the computer program code includes computer instructions, and when the one or more processors execute the computer instructions, the network device is enabled to perform the method according to any one of the second aspect or the possible implementations of the second aspect.

According to a fifth aspect, an embodiment of this application provides a computer storage medium. The computer storage medium stores a computer program, the computer program includes program instructions, and when the program instructions are executed by a processor, the method according to any one of the first aspect or the possible implementations of the first aspect is performed.

According to a sixth aspect, an embodiment of this application provides a computer storage medium. The computer storage medium stores a computer program, the computer program includes program instructions, and when the program instructions are executed by a processor, the method according to any one of the second aspect or the possible implementations of the second aspect is performed.

According to a seventh aspect, an embodiment of this application provides a computer program product. When the computer program product runs on a computer, the computer is enabled to perform the method according to any one of the first aspect or the possible implementations of the first aspect.

According to an eighth aspect, an embodiment of this application provides a computer program product. When the computer program product runs on a computer, the computer is enabled to perform the method according to any one of the second aspect or the possible implementations of the second aspect.

### BRIEF DESCRIPTION OF DRAWINGS

FIG. 1 is a schematic diagram of an application scenario of Wi-Fi access according to an embodiment of this application;
FIG. 2A and FIG. 2B are a schematic flowchart of a Wi-Fi access method according to an embodiment of this application;
FIG. 3A and FIG. 3B are a schematic flowchart of another Wi-Fi access method according to an embodiment of this application;
FIG. 4 is a schematic diagram of a structure of a terminal device according to an embodiment of this application;
FIG. 5 is a schematic diagram of a structure of a radio access controller according to an embodiment of this application; and
FIG. 6 is a schematic diagram of a structure of a radio access device according to an embodiment of this application.

### DESCRIPTION OF EMBODIMENTS

Technical solutions in embodiments of this application are clearly described below with reference to accompanying drawings in embodiments of this application. In descriptions of embodiments of this application, unless otherwise stated, "/" indicates "or". For example, A/B may indicate A or B. In addition, "and/or" in the text is merely an association relationship that describes an associated object, and indicates that three relationships may exist. For example, A and/or B may indicate that there are three cases: Only A exists, both A and B exist, and only B exists. In addition, in the descriptions of embodiments of this application, "a plurality of" means two or more.

It should be understood that the terms "first" and "second" in this specification, claims, and accompanying drawings of this application are used to distinguish different objects, and are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In this application, referring to "an embodiment" means that specific features, structures or features described with reference to the embodiment may be included in at least one embodiment of this application. The phrase shown in various locations in this specification may not necessarily refer to a same embodiment, and is not an independent or optional embodiment exclusive from another embodiment. Persons skilled in the art explicitly and implicitly understands that the described embodiments in this application may be combined with another embodiment.

Currently, the terminal device may support simultaneous use of dual-band Wi-Fi (2.4 GHz Wi-Fi and 5 GHz Wi-Fi). 2.4 GHz Wi-Fi has the following advantages: a low signal frequency, a low propagation attenuation in air or obstacles, a long propagation distance, and a large coverage area; and 2.4 GHz Wi-Fi has the following disadvantages: Most devices use 2.4 GHz Wi-Fi, which causes strong interference and cannot ensure high stability. 5 GHz Wi-Fi has the following advantages: low interference, a stable network speed, and a higher wireless rate; and 5 GHz Wi-Fi has the following disadvantages: a high signal frequency, a high propagation attenuation in air or obstacles, a short transmission distance, and a small coverage area. It can be easily learned that 2.4 GHz Wi-Fi and 5 GHz Wi-Fi complement each other. Therefore, simultaneous use of dual-band Wi-Fi can improve communication experience. For example, when a user is playing a game or watching a streaming media video, the dual-band Wi-Fi function can be used in redundancy or active/standby mode. This reduces a delay and occurrences of frame freezing, and increases smoothness in a game battle; and this increases a download rate and smoothness, and reduces occurrences of frame freezing in video download.

In a large area (such as a shopping mall, an office building, or a hotel), because a Wi-Fi coverage area of a single radio access device is limited, a plurality of radio access devices need to be deployed in a same wireless local area network to provide Wi-Fi. When a terminal device carried by the user roams in a same wireless local area network, because a coverage area of 2.4 GHz Wi-Fi is relatively large, the terminal device may not need to hand over to another radio access device. However, because a coverage area of 5 GHz Wi-Fi is relatively small, when a terminal device carried by the user roams between different radio access devices in a same wireless local area network, the terminal device needs to hand over to another radio access device to reconnect to the wireless local area network. In a scenario in which all radio access devices have different SSIDs, the user may need to enter information such as an SSID and a password of each radio access device one by one, so that the terminal device can complete access handover to reconnect to a wireless local area network, which is relatively complex. In addition, if a 5 GHz Wi-Fi signal is weak or unavailable, network game freezing, a low video download rate, and the like may be caused, and user experience is poor.

Embodiments of this application provide a Wi-Fi access method, so that a terminal device can implement smooth Wi-Fi roaming handover between different radio access devices, thereby improving user experience. In addition, to implement fast and smooth Wi-Fi (for example, 5 GHz Wi-Fi) roaming handover when the terminal device maintains an existing Wi-Fi connection (for example, 2.4 GHz Wi-Fi), for example, in an application scenario in which the terminal device is connected to dual-band Wi-Fi, by using the Wi-Fi access method according to this embodiment of this application, the terminal device may obtain, from the radio access controller, all or some information about radio access devices in a same wireless local area network by using the existing Wi-Fi connection (for example, 2.4 GHz Wi-Fi). In a scenario in which all radio access devices have different SSIDs, a radio access controller may exchange information such as a MAC address of a terminal device with all or some radio access devices in the same wireless local area network. When a physical position of the terminal device changes (the terminal device moves from a Wi-Fi coverage area of one radio access device to a Wi-Fi coverage area of another radio access device) or detects that a signal of another radio access device is relatively good, the terminal device can access the other radio access device in a password-free manner, to implement fast and smooth Wi-Fi (for example, 5 GHz Wi-Fi) roaming handover, and the user does not need to connect to all radio access devices in advance or enter user names and passwords, thereby simplifying user operations and improving user experience. In addition, the terminal device may ensure that at least one Wi-Fi connection path is used for communication with the radio access controller, thereby ensuring an internet access function of the terminal device.

The following describes an application scenario of Wi-Fi access according to an embodiment of this application.

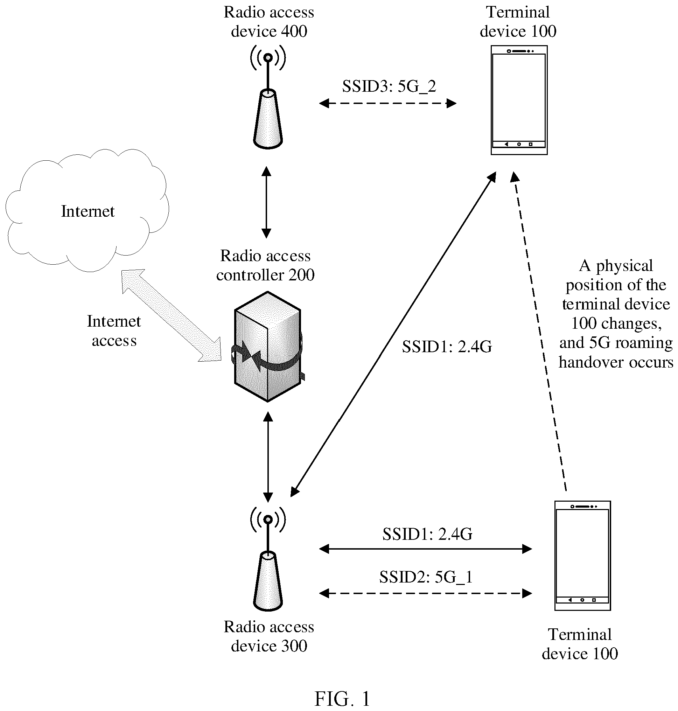

**FIG. 1** **shows an example of the application scenario of Wi-Fi access according to an embodiment of this application.**

As shown in FIG. 1, the application scenario may include a terminal device 100, a radio access controller 200 (which may also be referred to as a gateway), and a plurality of radio access devices (for example, a radio access device 300 and a radio access device 400 in FIG. 1). The radio access controller 200 may communicate with a plurality of radio access devices, and is responsible for managing all the radio access devices in the wireless local area network (for example, modifying related configuration parameters and performing access security control). In addition, the radio access controller 200 may also play a role of a radio access device and connect to the terminal device 100. After entering a coverage area of the wireless local area network, the terminal device 100 may obtain a name of a radio access device in the wireless local area network, that is, an SSID of the radio access device, and then may select the SSID for connection. After the terminal device 100 is connected to the radio access device, the radio access device may assign an internet protocol (Internet Protocol, IP) address to the terminal device 100. Then, the terminal device 100 can access the internet through the radio access device and the radio access controller, to implement a communication function.

The terminal device 100 may also be referred to as user equipment (user equipment, UE), an access terminal, a subscriber unit, a subscriber station, a mobile station, a mobile console, a remote terminal, a mobile device, a user terminal, a terminal, a wireless communication device, a user agent, or a user apparatus. The terminal device in this embodiment of this application may be a mobile phone (mobile phone), a tablet computer (Pad), a computer with a wireless transceiver function, a virtual reality (virtual reality, VR) terminal device, an augmented reality (augmented reality, AR) terminal device, a handheld device, a vehicle-mounted device, a wearable device, or the like. This is not limited herein.

In this embodiment of this application, the radio access controller 200 and the plurality of radio access devices may also be collectively referred to as network devices.

It should be understood that FIG. 1 is merely a schematic diagram of an application scenario of Wi-Fi access. The schematic diagram of the application scenario may further include more radio access devices or terminal devices. This is not limited herein.

In some embodiments, as shown in FIG. 1, the terminal device 100 may support simultaneous use of dual-band Wi-Fi (2.4 GHz Wi-Fi and 5 GHz Wi-Fi). For example, the terminal device 100 may establish a dual-band Wi-Fi connection to the radio access device 300. A name SSID1 of 2.4 GHz Wi-Fi may be set to "2.4G", and a name SSID2 of 5 GHz Wi-Fi may be set to "5G_1". When the physical position of the terminal device 100 changes from a Wi-Fi coverage area of the radio access device 300 to a Wi-Fi coverage area of the radio access device 400, because the coverage area of 2.4 GHz Wi-Fi is relatively large, the radio access device 300 may continue to provide 2.4 GHz Wi-Fi, that is, the 2.4 GHz Wi-Fi may be still properly connected. However, because the coverage area of 5 GHz Wi-Fi is relatively small, the radio access device 300 may not continue to provide 5 GHz Wi-Fi, that is, a 5 GHz Wi-Fi signal is weak or unavailable, and 5 GHz Wi-Fi roaming handover occurs. In this case, the terminal device 100 may detect a name SSID3 of 5 GHz Wi-Fi provided by the radio access device 400, where the SSID3 may be set to "5G_2". In an application scenario in which the SSIDs of the radio access devices are different, if the terminal device 100 has not been connected to the radio access device 400 before, the terminal device 100 can establish a connection to the radio access device 400 only after receiving the user's operations of selecting the SSID 3 and entering information such as a user name and a password, that is, access the radio access device 400 and reconnect to 5 GHz Wi-Fi. It can be easily learned that, in the process of 5 GHz Wi-Fi connection handover from the SSID 2 to the SSID 3, operations are complex, and user experience is poor.

In the Wi-Fi access method according to this embodiment of this application, user operations can be simplified, and user experience can be improved. There are mainly two solutions:
Solution 1: Based on information about a Media Access Control (Media Access Control, MAC) address of the terminal device 100, the terminal device 100 can access all or some available radio access devices in a wireless local area network managed by the radio access controller 200 in a password-free manner in an application scenario in which the SSIDs of the radio access devices are different, so as to implement fast and smooth 5 GHz Wi-Fi roaming handover.
Solution 2: Based on cookie information of the terminal device 100 (including a MAC address and a keepalive time of the terminal device 100), the terminal device 100 can access all or some available radio access devices in a wireless local area network managed by the radio access controller 200 in a password-free manner in an application scenario in which the SSIDs of the radio access devices are different, so as to implement fast and smooth 5 GHz Wi-Fi roaming handover.

The foregoing two solutions are described in detail in subsequent embodiments, and details are not described herein.

In this embodiment of this application, "password-free" means that the terminal device 100 does not need to receive the user's operation of manually entering a password, or the terminal device 100 does not need to send a password to the radio access controller or the radio access device.

In this embodiment of this application, a 2.4 GHz Wi-Fi connection may be referred to as a connection on a first Wi-Fi frequency band, and a 5 GHz Wi-Fi connection may be referred to as a connection on a second Wi-Fi frequency band.

The following describes a procedure of a Wi-Fi access method according to an embodiment of this application.

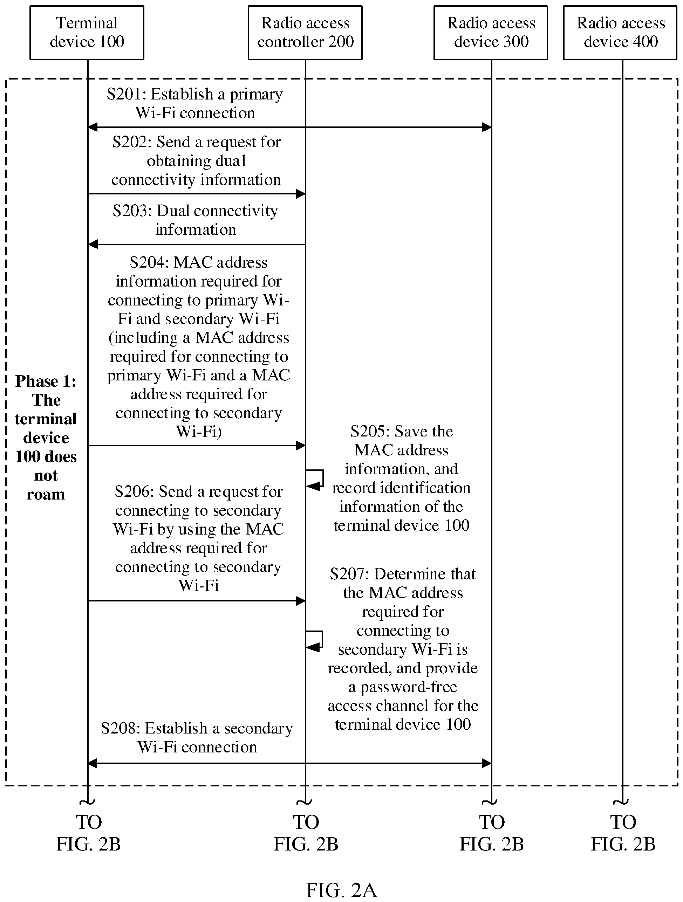

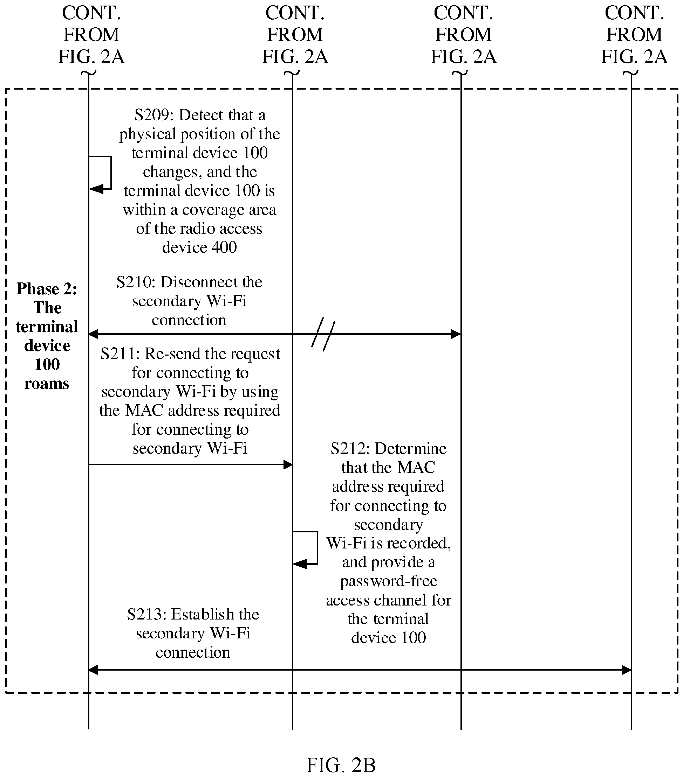

**FIG. 2A** **and** **FIG. 2B** **show an example of the procedure of a Wi-Fi access method according to an embodiment of this application.**

As shown in FIG. 2A and FIG. 2B, the method may be applied to a communication system that includes a terminal device 100, a radio access controller 200, a radio access device 300, and a radio access device 400. The radio access controller 200, the radio access device 300, and the radio access device 400 are in a same wireless local area network, that is, the radio access device 300 and the radio access device 400 are managed by the radio access controller 200. The following describes in detail specific steps of the method.

### Phase 1: The terminal device 100 does not roam.

The terminal device 100 establishes a primary Wi-Fi (also referred to as first Wi-Fi) connection to the radio access device 300 (which may also be referred to as a first radio access device) (in some embodiments, the foregoing embodiment may be step S201).

Specifically, the terminal device 100 may receive a user's operation of enabling a WLAN communication module, the terminal device 100 enables a WLAN communication function in response to the operation. When the terminal device 100 enters a Wi-Fi coverage area of the radio access device 300, the terminal device 100 may obtain information about the radio access device 300, where the information may include an SSID, a MAC address, signal strength, an encryption type, and the like of the radio access device 300. Then, the terminal device 100 establishes the primary Wi-Fi connection to the radio access device 300.

Primary Wi-Fi may be 2.4 GHz Wi-Fi in the text description in FIG. 1.

There may be the following two implementations in which the terminal device 100 establishes the primary Wi-Fi connection to the radio access device 300:

Implementation 1: If the terminal device 100 establishes the primary Wi-Fi connection to the radio access device 300 for the first time, the terminal device 100 may receive the user's operation of selecting the radio access device 300, and the terminal device 100 establishes the primary Wi-Fi connection to the radio access device 300 in response to the operation. The user's operation of selecting to access the radio access device 300 may include: the user clicks an SSID of the radio access device 300 in the list of available WLANs displayed on the terminal device 100 (or the user manually enters the SSID of the radio access device 300 on the terminal device 100), and then the user manually enters information such as a user name and a password on the terminal device 100.

Implementation 2: If it is not the first time that the terminal device 100 establishes the primary Wi-Fi connection to the radio access device 300, the terminal device 100 may directly select an SSID of the radio access device 300 in the list of available WLANs, and complete establishment of the primary Wi-Fi connection between the terminal device 100 and the radio access device 300 by using stored historical information. The stored historical information may be information such as a user name and a password that are manually entered by the user when the terminal device 100 establishes the primary Wi-Fi connection to the radio access device 300 for the first time.

The terminal device 100 sends a request for obtaining dual connectivity information to the radio access controller 200 through the primary Wi-Fi connection (in some embodiments, the foregoing embodiment may be step S202). After receiving the request for obtaining dual connectivity information sent by the terminal device 100, the radio access controller 200 sends the dual connectivity information to the terminal device 100 (in some embodiments, the foregoing embodiment may be step S203).

Specifically, the terminal device 100 may support simultaneous use of dual-band Wi-Fi (2.4 GHz Wi-Fi and 5 GHz Wi-Fi). After the terminal device 100 establishes the primary Wi-Fi connection to the radio access device 300, the terminal device 100 may send a request for obtaining dual connectivity information (Dual Connection Information, DC Info) to the radio access controller 200 through the primary Wi-Fi connection. After receiving the request for obtaining dual connectivity information that is sent by the terminal device 100, the radio access controller 200 sends the dual connectivity information to the terminal device 100. The dual connectivity information may include information about all or some of available radio access devices (including SSIDs, MAC addresses, and the like of the radio access devices) in a wireless local area network managed by the radio access controller 200.

In a possible implementation, the terminal device 100 may send a request for obtaining dual connectivity information to the radio access device 300 through the primary Wi-Fi connection. Then, the radio access device 300 may forward the request to the radio access controller 200. After receiving the request, the radio access controller 200 may send the dual connectivity information to the radio access device 300. After receiving the dual connectivity information, the radio access device 300 sends the dual connectivity information to the terminal device 100.

In some embodiments, after the terminal device 100 sends the request for obtaining dual connectivity information to the radio access controller 200 through the primary Wi-Fi connection, if the terminal device 100 does not receive the dual connectivity information sent by the radio access controller 200, it indicates that the radio access controller 200 does not support the terminal device 100 in connecting to dual-band Wi-Fi, and the terminal device 100 does not perform a subsequent step.

In some embodiments, step S202 is optional. For example, if it is not the first time that the terminal device 100 enters the coverage area of the wireless local area network managed by the radio access controller 200, the terminal device 100 may know that the radio access controller 200 supports the terminal device 100 in connecting to dual-band Wi-Fi, and stores dual connectivity information obtained when the terminal device 100 enters the wireless local area network for the first time. Therefore, the dual connectivity information can be obtained without performing step S202 again. For another example, if the terminal device 100 is a terminal device with a specific identifier, and enters the coverage area of the wireless local area network managed by the radio access controller 200, the radio access controller 200 may identify that the terminal device 100 is a terminal device with a specific identifier, the radio access controller 200 may send dual connectivity information to the terminal device 100, and the terminal device does not need to perform step S202.

In some actual application scenarios, if it is not the first time that the terminal device 100 does not enter the coverage area of the wireless local area network managed by the radio access controller 200, the terminal device 100 also needs to perform step S202. For example, when the radio access controller 200 may disable the dual-band Wi-Fi connection, or when information about all or some available radio access devices in the wireless local area network managed by the radio access controller 200 changes, if the terminal device 100 does not perform step S202, the dual-band Wi-Fi connection may not be properly established.

The dual connectivity information includes information about all or some available radio access devices, and the following provides descriptions according to different application scenarios.

Application scenario 1: If the coverage area of the wireless local area network managed by the radio access controller 200 is a relatively small area (for example, a private place), the dual connectivity information may include information about all available radio access devices.

Application scenario 2: If a coverage area of a wireless local area network managed by the radio access controller 200 is a relatively large area (for example, a large shopping mall), and the area includes a plurality of sub-areas (such as an area A, an area B, an area C, and an area D), the dual connectivity information may include only information about some available radio access devices. For example, when the terminal device 100 is in the area A and far away from the area B, the area C, and the area D, the dual connectivity information may include only information about an available radio access device in the area A. For another example, when the terminal device 100 is in the area A, near the area B, and far away from the area C and the area D, the dual connectivity information may include only information about available radio access devices in the area A and the area B. For another example, when the terminal device 100 is in the area C, close to the area B and the area D, and far away from the area A, the dual connectivity information may include only information about available radio access devices in the area B, the area C, and the area D.

Application scenario 3: If the coverage area of the wireless local area network managed by the radio access controller 200 is a confidential area (for example, an office building, a scientific research institute, or a camp), the radio access controller 200 may determine, according to a user permission, that the dual connectivity information includes information about all or some available radio access devices. For example, for a user with a specific permission (for example, a senior manager), the dual connectivity information may include only information about several specific dedicated radio access devices. For another example, for a user with a level 1 permission (for example, a common worker), the dual connectivity information may include information about all available radio access devices other than the information about the several specific dedicated radio access devices. For another example, for a user with a level 2 permission (for example, a visitor), the dual connectivity information may include only information about some available radio access devices other than the information about the specific dedicated radio access devices.

In some actual application scenarios, the SSID of a radio access device may change periodically, provided that the terminal device of the user can access a radio access device that is not aged, and information security of a network provider is ensured.

It should be noted that all or some of the foregoing available radio access devices may include the radio access device 300 and the radio access device 400, and are not limited to the radio access device 300 and the radio access device 400. All or some of the foregoing available radio access devices may further include more radio access devices. In this application, only the radio access device 300 and the radio access device 400 are used as an example to describe the Wi-Fi access method, and this should not constitute a limitation on this application.

After obtaining the dual connectivity information, the terminal device 100 sends the MAC address information of the terminal device 100 to the radio access controller 200 (in some embodiments, the foregoing embodiment may be step S204). The foregoing MAC address information is MAC address information required for connecting to primary Wi-Fi and secondary Wi-Fi (including a MAC address required for connecting to primary Wi-Fi and a MAC address required for connecting to secondary Wi-Fi).

Specifically, after obtaining the dual connectivity information, the terminal device 100 may send MAC address information of the terminal device 100 to the radio access controller 200, where the MAC address information may include a MAC address required for connecting to primary Wi-Fi and a MAC address required for connecting to secondary Wi-Fi. The MAC address required by the terminal device 100 for connecting to primary Wi-Fi may be set to a MAC address 1, and the MAC address required by the terminal device 100 for connecting to secondary Wi-Fi may be set to a MAC address 2.

Secondary Wi-Fi may be 5 GHz Wi-Fi in the text description in FIG. 1.

In a possible implementation, the terminal device 100 may obtain the dual connectivity information by using the radio access device 300, and then may send the MAC address information of the terminal device 100 to the radio access device 300 through the primary Wi-Fi connection. Then, the radio access device 300 may forward the MAC address information to the radio access controller 200.

After receiving the MAC address information sent by the terminal device 100, the radio access controller 200 stores the MAC address information, and records identification information of the terminal device 100 (in some embodiments, the foregoing embodiment may be step S205).

Specifically, after receiving the MAC address 1 and the MAC address 2 sent by the terminal device 100, the radio access controller 200 stores the MAC address 1 and the MAC address 2, that is, stores the MAC address 1 and the MAC address 2 in the radio access controller 200, records the identification information of the terminal device 100, and exchanges the foregoing MAC address information with all or some of available radio access devices in the wireless local area network managed by the radio access controller 200 (for example, the radio access controller 200 may extend an interactive negotiation protocol with the radio access device), so that all or some of available radio access devices in the wireless local area network managed by the radio access controller 200 store the MAC address information of the terminal device 100, that is, all or some of the available radio access devices in the wireless local area network managed by the radio access controller 200 may also record the MAC address 1 and the MAC address 2. The identification information of the terminal device 100 may include the MAC address 1 and the MAC address 2.

In this embodiment of this application, a process in which the radio access controller 200 and/or the radio access device store/stores or record/records the MAC address information may be referred to as an "authentication process", and the MAC address information may be referred to as authentication information of the terminal device 100.

The radio access device with which the radio access controller 200 exchanges the MAC address information is the radio access device included in the dual connectivity information. For example, if the foregoing dual connectivity information includes all available radio access devices, the radio access controller 200 exchanges the foregoing MAC address information with all available radio access devices in the wireless local area network managed by the radio access controller 200. For another example, if the foregoing dual connectivity information includes some available radio access devices, the radio access controller 200 exchanges the foregoing MAC address information with some available radio access devices in the wireless local area network managed by the radio access controller 200.

In some embodiments, the MAC address information may also be stored only in the radio access controller 200, that is, the radio access controller 200 may not exchange the MAC address information with the radio access device.

The terminal device 100 sends a request for connecting to secondary Wi-Fi to the radio access controller 200 by using the MAC address required for connecting to secondary Wi-Fi (in some embodiments, the foregoing embodiment may be step S206).

Specifically, the terminal device 100 may display dual connectivity information obtained by the radio access controller 200, where the dual connectivity information may include an information list of all or some available radio access devices in the wireless local area network managed by the radio access controller 200.

In a possible implementation, the terminal device 100 may receive the user's operation of selecting information about one radio access device (for example, the radio access device 300) in the foregoing list, and the terminal device 100 sends, in response to the operation, a request for connecting to secondary Wi-Fi to the radio access controller 200 by using a MAC address required for connecting to secondary Wi-Fi, that is, the foregoing MAC address 2. The user may manually select information about one of the radio access devices (for example, the radio access device 300) in the foregoing list based on parameters such as Wi-Fi signal strength and a historical connection frequency.

In a possible implementation, the terminal device 100 may also automatically select one of the radio access devices (for example, the radio access device 300) in the foregoing list based on parameters such as Wi-Fi signal strength and a historical connection frequency, without a need of manual selection by the user. For example, the terminal device 100 may automatically select the radio access device with the highest Wi-Fi signal strength. For another example, the terminal device 100 may automatically select the radio access device with the highest historical connection frequency. For another example, the terminal device 100 may automatically select the radio access device with the best communication quality that is recommended by the radio access controller 200. Then, the terminal device 100 sends a request for connecting to secondary Wi-Fi to the radio access controller 200 by using the MAC address required for connecting to secondary Wi-Fi, that is, the MAC address 2.

After receiving the request for connecting to secondary Wi-Fi that is sent by the terminal device 100, the radio access controller 200 provides a password-free access channel for the terminal device 100 if it is determined that the MAC address required for connecting to secondary Wi-Fi is recorded (in some embodiments, the foregoing embodiment may be step S207).

Specifically, after receiving the request for connecting to secondary Wi-Fi that is sent by the terminal device 100, the radio access controller 200 may detect whether the MAC address required for connecting to secondary Wi-Fi is recorded in the radio access controller 200. If it is determined that the MAC address required for connecting to secondary Wi-Fi is recorded, and the radio access controller 200 has previously exchanged authentication information of the terminal device 100 with all or some available radio access devices (for example, the radio access device 300) in the wireless local area network managed by the radio access controller 200, the radio access controller 200 may provide a password-free access channel for the terminal device 100, that is, the terminal device 100 can access the radio access device (for example, the radio access device 300) without a need for a user to enter a password again.

In a possible implementation, when the MAC address information of the terminal device 100 is stored only in the radio access controller 200, if the terminal device 100 needs to access the radio access device 300, the radio access controller 200 may exchange the MAC address information with the radio access device 300, so as to provide a password-free access channel for the terminal device 100.

The terminal device 100 establishes a secondary Wi-Fi connection to the radio access device 300 (in some embodiments, the foregoing embodiment may be step S208).

Specifically, after the radio access controller 200 provides the password-free access channel for the terminal device 100, the terminal device can access the radio access device 300 without a need for the user to enter the password again, to implement the secondary Wi-Fi connection, that is, the terminal device 100 successfully establishes the secondary Wi-Fi connection to the radio access device 300.

In a possible implementation, after step S201 to step S205 are completed, if the terminal device 100 needs to establish a secondary Wi-Fi connection to the radio access device 300, the terminal device 100 may also send a request for connecting to secondary Wi-Fi to the radio access device 300 by using a MAC address required for connecting to secondary Wi-Fi. After the radio access device 300 receives the request for connecting to secondary Wi-Fi that is sent by the terminal device 100, because the radio access device 300 has exchanged the authentication information of the terminal device 100 with the radio access controller 200, the terminal device 100 can access the radio access device 300 in a password-free manner, to implement a secondary Wi-Fi connection.

In a possible implementation, the terminal device 100 may also establish a secondary Wi-Fi connection after receiving the user's operation of inputting the SSID and the password of the radio access device.

In a possible implementation, the terminal device 100 may not establish a secondary Wi-Fi connection to the radio access device 300, but establish a secondary Wi-Fi connection to a radio access device other than the radio access device 300 and the radio access device 400. For example, the terminal device 100 may establish the secondary Wi-Fi connection to the radio access device 500 (which may also be referred to as a second radio access device), where the radio access device 500 is also managed by the radio access controller 200, and is in the same wireless local area network as the radio access device 300 and the radio access device 400.

The secondary Wi-Fi connection in the text description of step S206 to step S208 may be referred to as a second Wi-Fi connection.

### Phase 2: The terminal device 100 roams.

The terminal device 100 detects that a physical position of the terminal device 100 changes, and the terminal device 100 is within a coverage area of the radio access device 400 (which may also be referred to as a third radio access device) (in some embodiments, the foregoing embodiment may be step S209).

The terminal device 100 disconnects the foregoing secondary Wi-Fi connection from the radio access device 300 (in some embodiments, the foregoing embodiment may be step S210).

In some embodiments, if the coverage area of 5 GHz Wi-Fi of the radio access device 300 does not overlap the coverage area of 5 GHz Wi-Fi of the radio access device 400, after the terminal device 100 detects that a physical position of the terminal device 100 changes and the terminal device 100 is in the coverage area of 5 GHz Wi-Fi of the radio access device 400, a 5 GHz Wi-Fi signal of the radio access device 300 is unavailable. Therefore, the terminal device 100 disconnects the foregoing secondary Wi-Fi connection from the radio access device 300, and then may attempt to establish the secondary Wi-Fi connection to the radio access device 400.

In some embodiments, if the coverage area of 5 GHz Wi-Fi of the radio access device 300 overlaps the coverage area of 5 GHz Wi-Fi of the radio access device 400, the terminal device 100 may detect that a physical position of the terminal device 100 changes, and when the terminal device 100 enters the coverage area of 5 GHz Wi-Fi of the radio access device 400, that is, when the terminal device 100 is away from the radio access device 300 and is close to the radio access device 400, a 5 GHz Wi-Fi signal of the radio access device 300 is weakened, and a 5 GHz Wi-Fi signal of the radio access device 400 is enhanced. Therefore, the terminal device 100 may also disconnect the secondary Wi-Fi connection from the radio access device 300, and then may attempt to establish the secondary Wi-Fi connection to the radio access device 400 with a strong 5 GHz Wi-Fi signal.

In some embodiments, if communication quality of 5 GHz Wi-Fi of the radio access device 300 is poor, and communication quality of 5 GHz Wi-Fi of the radio access device 400 is higher than communication quality of 5 GHz Wi-Fi of the radio access device 300, for example, the communication quantity of the radio access device 300 is poor because a relatively large quantity of terminal devices are connected, while the communication quality of the radio access device 400 may be higher than that of the radio access device 300 because a relatively large quantity of terminal devices are connected, in this case, the terminal device 100 may also disconnect the secondary Wi-Fi connection from the radio access device 300, and then may attempt to establish the secondary Wi-Fi connection to the radio access device 400.

In some embodiments, if the Wi-Fi signal of the radio access device 400 is stronger than the Wi-Fi signal of the radio access device 300, even if the physical position of the terminal device 100 does not change, the terminal device 100 may also disconnect the secondary Wi-Fi connection from the radio access device 300, and then may attempt to establish the secondary Wi-Fi connection to the radio access device 400.

It should be noted that step S210 is optional. In some embodiments, after establishing the secondary Wi-Fi connection to the radio access device 400, the terminal device 100 may also disconnect the secondary Wi-Fi connection from the radio access device 300.

The terminal device 100 sends a request for connecting to secondary Wi-Fi to the radio access controller 200 by using the MAC address required for connecting to secondary Wi-Fi (in some embodiments, the foregoing embodiment may be step S211).

Specifically, when 5 GHz Wi-Fi roaming handover of the terminal device 100 is needed (for example, when the terminal device 100 is in a coverage area of 5 GHz Wi-Fi of the radio access device 400), the terminal device 100 may display dual connectivity information obtained from the radio access controller 200, where the dual connectivity information may include an information list of all or some available radio access devices in the wireless local area network managed by the radio access controller 200.

In a possible implementation, the terminal device 100 may receive the user's operation of selecting information about one radio access device (for example, the radio access device 400) in the foregoing list, and the terminal device 100 sends, in response to the operation, a request for connecting to secondary Wi-Fi to the radio access controller 200 by using a MAC address required for connecting to secondary Wi-Fi, that is, the foregoing MAC address 2. The user may manually select information about one of the radio access devices (for example, the radio access device 400) in the foregoing list based on parameters such as Wi-Fi signal strength and a historical connection frequency.

In a possible implementation, the terminal device 100 may also automatically select one of the radio access devices (for example, the radio access device 400) in the foregoing list based on parameters such as Wi-Fi signal strength and a historical connection frequency, without a need of manual selection by the user. For example, the terminal device 100 may automatically select the radio access device with the highest Wi-Fi signal strength. For another example, the terminal device 100 may automatically select the radio access device with the highest historical connection frequency. For another example, the terminal device 100 may automatically select the radio access device with the best communication quality that is recommended by the radio access controller 200. Then, the terminal device 100 sends a request for connecting to secondary Wi-Fi to the radio access controller 200 by using the MAC address required for connecting to secondary Wi-Fi, that is, the MAC address 2.

After receiving the request for connecting to secondary Wi-Fi that is sent by the terminal device 100, if it is determined that the MAC address of secondary Wi-Fi is recorded, the radio access controller 200 provides a password-free access channel for the terminal device 100 (in some embodiments, the foregoing embodiment may be step S212).

Specifically, after receiving the request for connecting to secondary Wi-Fi that is sent by the terminal device 100, the radio access controller 200 may detect whether the MAC address required for connecting to secondary Wi-Fi is recorded in the radio access controller 200. If it is determined that the MAC address required for connecting to secondary Wi-Fi is recorded, and the radio access controller 200 has previously exchanged the authentication information of the terminal device 100 with all or some available radio access devices (for example, the radio access device 400) in the wireless local area network managed by the radio access controller 200, the radio access controller 200 may provide a password-free access channel for the terminal device 100, that is, the terminal device 100 can access the radio access device (for example, the radio access device 400) without a need for a user to enter a password again.

In a possible implementation, when the MAC address information of the terminal device 100 is stored only in the radio access controller 200, if the terminal device 100 needs to access the radio access device 400, the radio access controller 200 may exchange the MAC address information with the radio access device 400, so as to provide a password-free access channel for the terminal device 100.

The terminal device 100 establishes a secondary Wi-Fi connection to the radio access device 400 (in some embodiments, the foregoing embodiment may be step S213).

Specifically, after the radio access controller 200 provides the password-free access channel for the terminal device 100, the terminal device can access the radio access device 400 without a need for a user to enter a password again, that is, the terminal device 100 successfully establishes the secondary Wi-Fi connection to the radio access device 400, so as to implement fast and smooth 5 GHz Wi-Fi roaming handover.

In a possible implementation, when the terminal device 100 needs to perform roaming handover (for example, when the terminal device 100 is in the coverage area of the radio access device 400), if the terminal device 100 needs to establish a secondary Wi-Fi connection to the radio access device 400, the terminal device 100 may also send a request for connecting to secondary Wi-Fi to the radio access device 400 by using a MAC address required for connecting to secondary Wi-Fi. After the radio access device 400 receives the request for connecting to secondary Wi-Fi that is sent by the terminal device 100, because the radio access device 400 has exchanged the authentication information of the terminal device 100 with the radio access controller 200, the terminal device 100 can access the radio access device 400 in a password-free manner, to implement fast and smooth 5 GHz Wi-Fi roaming handover.

The secondary Wi-Fi connection in the text description of step S211 to step S213 may be referred to as a third Wi-Fi connection.

An embodiment of this application provides a Wi-Fi access method. In an application scenario in which a terminal device connects to dual-band Wi-Fi, the terminal device may obtain, from a radio access controller by using existing 2.4 GHz Wi-Fi, information about all radio access devices in a same wireless local area network. In a scenario in which SSIDs of all radio access devices are different, when a physical position of the terminal device changes (the terminal device moves from a Wi-Fi coverage area of one radio access device to a Wi-Fi coverage area of another radio access device), a terminal device can access the another radio access device in a password-free manner, to implement fast and smooth 5 GHz Wi-Fi roaming handover. A user does not need to connect to the radio access device in advance or enter information such as a user name and a password, thereby simplifying user operations and improving Wi-Fi roaming experience of the user. In addition, because the radio access controller may exchange authentication information of the terminal device with all or some radio access devices in the same wireless local area network, if a new radio access device is added when configurations of the radio access controller are expanded, the terminal device can still implement fast and smooth 5 GHz Wi-Fi roaming handover.

It should be noted that, in this embodiment of this application, the Wi-Fi access method is described in detail only by using an example in which primary Wi-Fi (an existing connection) is 2.4 GHz Wi-Fi and secondary Wi-Fi is 5 GHz Wi-Fi (that is, it is ensured that the 2.4 GHz Wi-Fi connection remains unchanged and 5 GHz Wi-Fi roaming handover is quickly completed), and this should not constitute a limitation on this application. In some embodiments, an example in which primary Wi-Fi (an existing connection) is 5 GHz Wi-Fi and secondary Wi-Fi is 2.4 GHz Wi-Fi may be further used to describe a Wi-Fi access method (that is, it is ensured that a 5 GHz Wi-Fi connection remains unchanged, and 2.4 GHz Wi-Fi roaming handover is quickly completed). This is not limited herein.

In some embodiments, to avoid a ping-pong effect caused by frequent Wi-Fi handover, a time threshold may be set. For example, if the time threshold is set to 30 minutes, it indicates that the terminal device can perform next Wi-Fi handover only 30 minutes after the current Wi-Fi handover is completed.

The following describes a procedure of another Wi-Fi access method according to an embodiment of this application.

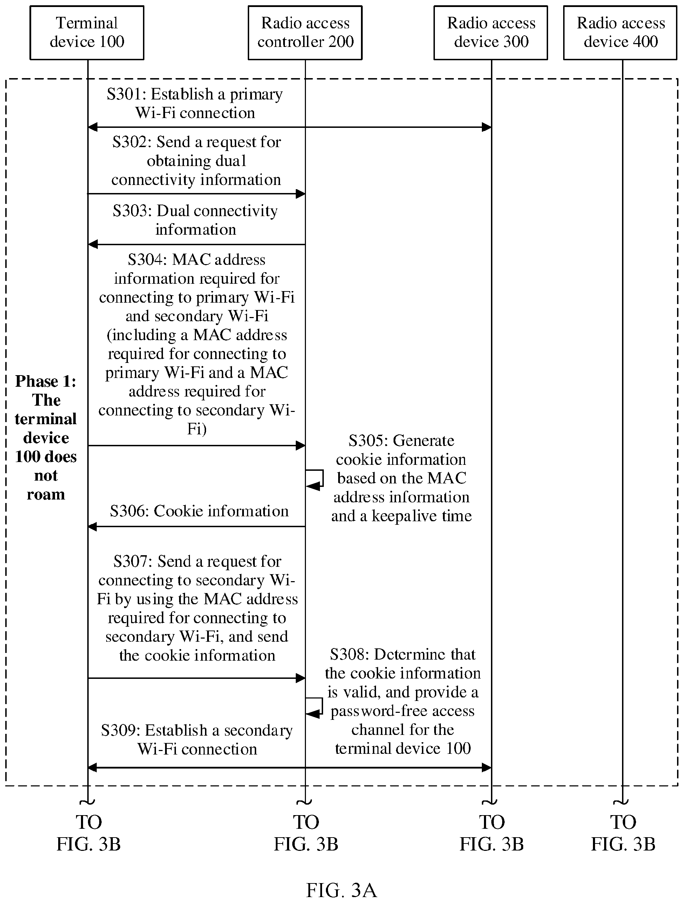

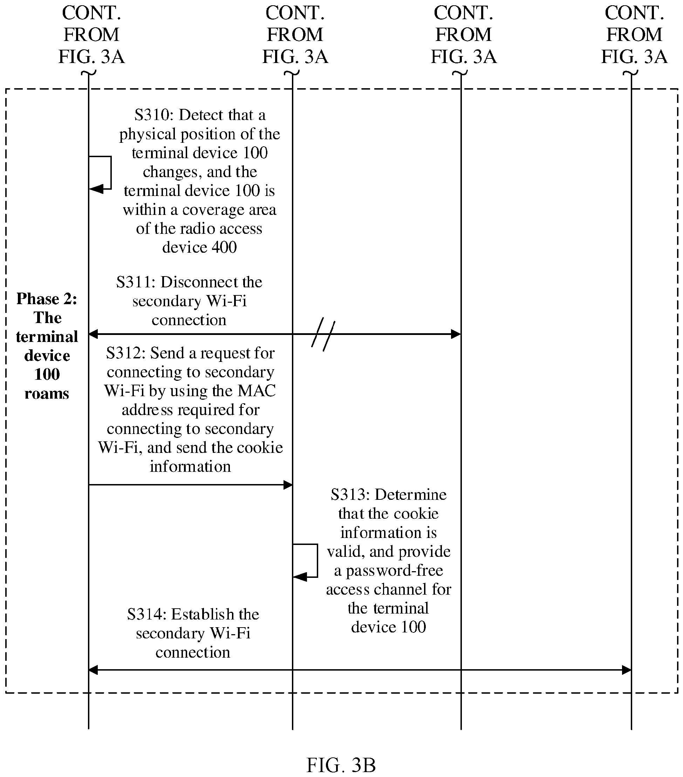

**FIG. 3A** **and** **FIG. 3B** **show an example of the procedure of another Wi-Fi** access **method according to an embodiment of this application.**

As shown in FIG. 3A and FIG. 3B, the method may be applied to a communication system that includes a terminal device 100, a radio access controller 200, a radio access device 300, and a radio access device 400. The radio access controller 200, the radio access device 300, and the radio access device 400 are in a same wireless local area network, that is, the radio access device 300 and the radio access device 400 are managed by the radio access controller 200. The following describes in detail specific steps of the method.

### Phase 1: The terminal device 100 does not roam.

The terminal device 100 establishes a primary Wi-Fi connection to the radio access device 300 (in some embodiments, the foregoing embodiment may be step S301).

For a specific execution process of step S301, refer to related content in step S201 in the embodiment shown in FIG. 2A and FIG. 2B. Details are not described herein again.

The terminal device 100 sends a request for obtaining dual connectivity information to the radio access controller 200 through the primary Wi-Fi connection (in some embodiments, the foregoing embodiment may be step S302). After receiving the request for obtaining dual connectivity information sent by the terminal device 100, the radio access controller 200 sends the dual connectivity information to the terminal device 100 (in some embodiments, the foregoing embodiment may be step S303).

For a specific execution process of step S302 and step S303, refer to related content in step S202 and step S203 in the embodiment shown in FIG. 2A and FIG. 2B. Details are not described herein again.

After obtaining the dual connectivity information, the terminal device 100 sends the MAC address information of the terminal device 100 to the radio access controller 200 (in some embodiments, the foregoing embodiment may be step S304). The foregoing MAC address information is MAC address information required for connecting to primary Wi-Fi and secondary Wi-Fi (including a MAC address required for connecting to primary Wi-Fi and a MAC address required for connecting to secondary Wi-Fi).

For a specific execution process of step S304, refer to related content in step S204 in the embodiment shown in FIG. 2A and FIG. 2B. Details are not described herein again.

After receiving the foregoing MAC address information sent by the terminal device 100, the radio access controller 200 may generate cookie information based on the foregoing MAC address information and the keepalive time (which may also be referred to as a first time) (in some embodiments, the foregoing embodiment may be step S305), and then the radio access controller 200 may send the foregoing cookie information to the terminal device 100 (in some embodiments, the foregoing embodiment may be step S306).

Specifically, after receiving the foregoing MAC address information (including the MAC address required for connecting to primary Wi-Fi and the MAC address required for connecting to secondary Wi-Fi) sent by the terminal device 100, the radio access controller 200 generates the cookie information based on the foregoing MAC address information and the keepalive time, and exchanges the cookie information with all or some available radio access devices in the wireless local area network managed by the radio access controller 200 (for example, the radio access controller 200 may extend an interaction negotiation protocol with the radio access devices). Then, the radio access controller 200 may send the cookie information to the terminal device 100.

The keepalive time may be a validity period of the cookie information (which may also be referred to as authentication information of the terminal device 100). The keepalive time may be set to 10 minutes, 30 minutes, 1 hour, 2 hours, or the like. This is not limited herein.

For example, if the keepalive time is set to one hour, it indicates that the terminal device 100 can establish Wi-Fi connections to all or some of the available radio access devices in the wireless local area network managed by the radio access controller 200 only within one hour after the radio access controller 200 completes step S305 and step S306. If the time exceeds one hour, the terminal device 100 needs to re-send the MAC address information to the radio access controller 200, and wait until the radio access controller 200 completes step S305 and step S306 again, and then the terminal device 100 can re-establish Wi-Fi connections to all or some of the available radio access devices in the wireless local area network managed by the radio access controller 200.

The radio access device with which the radio access controller 200 exchanges the cookie information is the radio access device included in the dual connectivity information. For example, if the foregoing dual connectivity information includes all available radio access devices, the radio access controller 200 exchanges the foregoing cookie information with all available radio access devices in the wireless local area network managed by the radio access controller 200. For another example, if the foregoing dual connectivity information includes some available radio access devices, the radio access controller 200 exchanges the foregoing cookie information with some available radio access devices in the wireless local area network managed by the radio access controller 200.

In some embodiments, the radio access controller 200 may not exchange the cookie information with the radio access device.

It should be noted that the cookie is data stored on the local terminal device of the user, is a small segment of text data, and generally includes a name, a value, and several optional attributes used to control a validity period, security, and a use range of the cookie. In this embodiment of this application, the cookie information may include the foregoing MAC address information and the foregoing keepalive time, and is used by the terminal device 100 to provide the radio access controller 200 (or the radio access device) with authentication information required for establishing a Wi-Fi connection. In addition to the foregoing two parameters: the MAC address information and the foregoing keepalive time, the foregoing cookie information may further include another security parameter, which is not limited herein.

The terminal device 100 sends a request for connecting to secondary Wi-Fi to the radio access controller 200 by using the MAC address required for connecting to secondary Wi-Fi, and sends the cookie information to the radio access controller 200 (in some embodiments, the foregoing embodiment may be step S307).

Specifically, the terminal device 100 may display dual connectivity information obtained by the radio access controller 200, where the dual connectivity information may include an information list of all or some available radio access devices in the wireless local area network managed by the radio access controller 200.

In a possible implementation, the terminal device 100 may receive the user's operation of selecting information about one radio access device (for example, the radio access device 300) in the foregoing list, and the terminal device 100 sends, in response to the operation, a request for connecting to secondary Wi-Fi to the radio access controller 200 by using the MAC address required for connecting to secondary Wi-Fi, and sends the cookie information to the radio access controller 200. The user may manually select information about one of the radio access devices (for example, the radio access device 300) in the foregoing list based on parameters such as Wi-Fi signal strength and a historical connection frequency.

In a possible implementation, the terminal device 100 may also automatically select one of the radio access devices (for example, the radio access device 300) in the foregoing list based on parameters such as Wi-Fi signal strength and a historical connection frequency, without a need of manual selection by the user. For example, the terminal device 100 may automatically select the radio access device with the highest Wi-Fi signal strength. For another example, the terminal device 100 may automatically select the radio access device with the highest historical connection frequency. For another example, the terminal device 100 may automatically select the radio access device with the best communication quality that is recommended by the radio access controller 200. Then, the terminal device 100 sends a request for connecting to secondary Wi-Fi to the radio access controller 200 by using the MAC address required for connecting to secondary Wi-Fi, and sends the cookie information to the radio access controller 200.

After receiving the request for connecting to secondary Wi-Fi and the cookie information that are sent by the terminal device 100, if determining that the cookie information is valid, the radio access controller 200 provides a password-free access channel for the terminal device 100 (in some embodiments, the foregoing embodiment may be step S308).

Specifically, after receiving the request for connecting to secondary Wi-Fi and the cookie information that are sent by the terminal device 100, the radio access controller 200 determines whether the cookie information is valid. If the cookie information is valid, that is, the cookie information is within a range of the keepalive time, the MAC address information or other security parameters included in the cookie information are valid, and the radio access controller 200 has previously exchanged the authentication information with all or some available radio access devices (for example, the radio access device 300) in the wireless local area network managed by the radio access controller 200, the radio access controller 200 may provide a password-free access channel for the terminal device 100, that is, the terminal device 100 can access the radio access device (for example, the radio access device 300) without a need for a user to enter a password again.

In a possible implementation, if the radio access controller does not exchange the cookie information with the radio access device 300 before, if the terminal device 100 needs to access the radio access device 300, the radio access controller 200 may exchange the cookie information with the radio access device 300 again, so as to provide a password-free access channel for the terminal device 100.

The terminal device 100 establishes a secondary Wi-Fi connection to the radio access device 300 (in some embodiments, the foregoing embodiment may be step S309).

Specifically, after the radio access controller 200 provides the password-free access channel for the terminal device 100, the terminal device can access the radio access device 300 without a need for the user to enter the password again, to implement the secondary Wi-Fi connection, that is, the terminal device 100 successfully establishes the secondary Wi-Fi connection to the radio access device 300.

In a possible implementation, after step S301 to step S306 are completed, if the terminal device 100 needs to establish a secondary Wi-Fi connection to the radio access device 300, the terminal device 100 may also send a request for connecting to secondary Wi-Fi to the radio access device 300 by using a MAC address required for connecting to secondary Wi-Fi, and send the cookie information to the radio access device 300. After the radio access device 300 receives the request for connecting to secondary Wi-Fi and the cookie information that are sent by the terminal device 100, if the radio access controller has previously exchanged the cookie information with and the radio access device 300, the radio access device 300 may parse the cookie information. If it is determined that the cookie information is valid, the terminal device 100 can access the radio access device 300 in a password-free manner, to implement a secondary Wi-Fi connection.

In a possible implementation, the terminal device 100 may also establish a secondary Wi-Fi connection after receiving the user's operation of inputting the SSID and the password of the radio access device.

In a possible implementation, the terminal device 100 may not establish a secondary Wi-Fi connection to the radio access device 300, but establish a secondary Wi-Fi connection to a radio access device other than the radio access device 300 and the radio access device 400. For example, the terminal device 100 may establish the secondary Wi-Fi connection to the radio access device 500 (which may also be referred to as a second radio access device), where the radio access device 500 is also managed by the radio access controller 200, and is in the same wireless local area network as the radio access device 300 and the radio access device 400.

The secondary Wi-Fi connection in the text description of step S307 to step S309 may be referred to as a second Wi-Fi connection.

### Phase 2: The terminal device 100 roams.

The terminal device 100 detects that a physical position of the terminal device 100 changes, and the terminal device 100 is within a coverage area of the radio access device 400 (in some embodiments, the foregoing embodiment may be step S310).

The terminal device 100 disconnects the foregoing secondary Wi-Fi connection from the radio access device 300 (in some embodiments, the foregoing embodiment may be step S311).

For a specific execution process of step S310 and step S311, refer to related content in step S209 and step S210 in the embodiment shown in FIG. 2A and FIG. 2B. Details are not described herein again.

It should be noted that step S311 is optional. In some embodiments, after establishing the secondary Wi-Fi connection to the radio access device 400, the terminal device 100 may also disconnect the secondary Wi-Fi connection from the radio access device 300.

The terminal device 100 sends a request for connecting to secondary Wi-Fi to the radio access controller 200 by using the MAC address required for connecting to secondary Wi-Fi, and sends the cookie information to the radio access controller 200 (in some embodiments, the foregoing embodiment may be step S312).

Specifically, when roaming handover for 5 GHz Wi-Fi of the terminal device 100 is needed (for example, when the terminal device 100 is in a coverage area of 5 GHz Wi-Fi of the radio access device 400), the terminal device 100 may display dual connectivity information obtained from the radio access controller 200, where the dual connectivity information may include an information list of all or some available radio access devices in the wireless local area network managed by the radio access controller 200.

In a possible implementation, the terminal device 100 may receive the user's operation of selecting information about one radio access device (for example, the radio access device 400) in the foregoing list, and the terminal device 100 sends, in response to the operation, a request for connecting to secondary Wi-Fi to the radio access controller 200 by using the MAC address required for connecting to secondary Wi-Fi, and sends the cookie information to the radio access controller 200. The user may manually select information about one of the radio access devices (for example, the radio access device 400) in the foregoing list based on parameters such as Wi-Fi signal strength and a historical connection frequency.

In a possible implementation, the terminal device 100 may also automatically select one of the radio access devices (for example, the radio access device 400) in the foregoing list based on parameters such as Wi-Fi signal strength and a historical connection frequency, without a need of manual selection by the user. For example, the terminal device 100 may automatically select the radio access device with the highest Wi-Fi signal strength. For another example, the terminal device 100 may automatically select the radio access device with the highest historical connection frequency. For another example, the terminal device 100 may automatically select the radio access device with the best communication quality that is recommended by the radio access controller 200. Then, the terminal device 100 sends a request for connecting to secondary Wi-Fi to the radio access controller 200 by using the MAC address required for connecting to secondary Wi-Fi, and sends the cookie information to the radio access controller 200.

After receiving the request for connecting to secondary Wi-Fi and the cookie information that are sent by the terminal device 100, if determining that the cookie information is valid, the radio access controller 200 provides a password-free access channel for the terminal device 100 (in some embodiments, the foregoing embodiment may be step S313).

Specifically, after receiving the request for connecting to secondary Wi-Fi and the cookie information that are sent by the terminal device 100, the radio access controller 200 determines whether the cookie information is valid. If the cookie information is valid, that is, the cookie information is within a range of the keepalive time, the MAC address information or other security parameters included in the cookie information is valid, and the radio access controller 200 has previously exchanged the cookie information with all or some of available radio access devices (for example, the radio access device 400) in the wireless local area network managed by the radio access controller 200, the radio access controller 200 may provide a password-free access channel for the terminal device 100, that is, the terminal device 100 can access the radio access device (for example, the radio access device 400) without a need for a user to enter a password again.

In a possible implementation, if the radio access controller does not exchange the cookie information with the radio access device 400 before, if the terminal device 100 needs to access the radio access device 400, the radio access controller 200 may exchange the cookie information with the radio access device 400 again, so as to provide a password-free access channel for the terminal device 100.

The terminal device 100 establishes a secondary Wi-Fi connection to the radio access device 400 (in some embodiments, the foregoing embodiment may be step S314).

Specifically, after the radio access controller 200 provides the password-free access channel for the terminal device 100, the terminal device can access the radio access device 400 without a need for a user to enter a password again, that is, the terminal device 100 successfully establishes the secondary Wi-Fi connection to the radio access device 400, so as to implement fast and smooth 5 GHz Wi-Fi roaming handover.

In a possible implementation, after the terminal device 100 is in a coverage area of 5 GHz Wi-Fi of the radio access device 400 and disconnects the secondary Wi-Fi connection from the radio access device 300, if the terminal device 100 needs to establish a secondary Wi-Fi connection to the radio access device 400, the terminal device 100 may also send a request for connecting to secondary Wi-Fi to the radio access device 400 by using a MAC address required for connecting to secondary Wi-Fi, and send the cookie information to the radio access device 400. After the radio access device 400 receives the request for connecting to secondary Wi-Fi and the cookie information that are sent by the terminal device 100, if the radio access controller has previously exchanged the cookie information with and the radio access device 400, the radio access device 400 may parse the cookie information. If it is determined that the cookie information is valid, the terminal device 100 can access the radio access device 400 in a password-free manner, to implement fast and smooth 5 GHz Wi-Fi roaming handover.

The secondary Wi-Fi connection in the text description of step S312 to step S314 may be referred to as a third Wi-Fi connection.

It should be noted that, in this embodiment of this application, the Wi-Fi access method is described in detail only by using an example in which primary Wi-Fi (an existing connection) is 2.4 GHz Wi-Fi and secondary Wi-Fi is 5 GHz Wi-Fi (that is, it is ensured that the 2.4 GHz Wi-Fi connection remains unchanged and 5 GHz Wi-Fi roaming handover is quickly completed), and this should not constitute a limitation on this application. In some embodiments, an example in which primary Wi-Fi (an existing connection) is 5 GHz Wi-Fi and secondary Wi-Fi is 2.4 GHz Wi-Fi may be further used to describe a Wi-Fi access method (that is, it is ensured that a 5 GHz Wi-Fi connection remains unchanged, and 2.4 GHz Wi-Fi roaming handover is quickly completed). This is not limited herein.

In some embodiments, to avoid a ping-pong effect caused by frequent Wi-Fi handover, a time threshold may be set. For example, if the time threshold is set to 30 minutes, it indicates that the terminal device can perform next Wi-Fi handover only 30 minutes after the current Wi-Fi handover is completed.

From the method shown in FIG. 2A and FIG. 2B and the method shown in FIG. 3 A and FIG. 3B, it can be easily learned that, in addition to achieving beneficial effects of the method shown in FIG. 2A and FIG. 2B, the method shown in FIG. 3A and FIG. 3B is advantageous over the method shown in FIG. 2A and FIG. 2B in that the method shown in FIG. 3A and FIG. 3B does not need to occupy a resource of the radio access controller 200 to store the MAC address information of the terminal device 100. Specifically, in the method shown in FIG. 2A and FIG. 2B, after receiving the MAC address information sent by the terminal device 100, the radio access controller 200 stores the MAC address information in the radio access controller 200. Therefore, resources of the radio access controller 200 need to be occupied. However, in the method shown in FIG. 3A and FIG. 3B, after generating the cookie information according to the MAC address information and the keepalive time that are sent by the terminal device 100, the radio access controller 200 sends the cookie information to the terminal device 100. Therefore, resources of the radio access controller 200 do not need to be occupied to store the MAC address information of the terminal device 100.

The following describes a structure of a terminal device 100 according to an embodiment of this application.

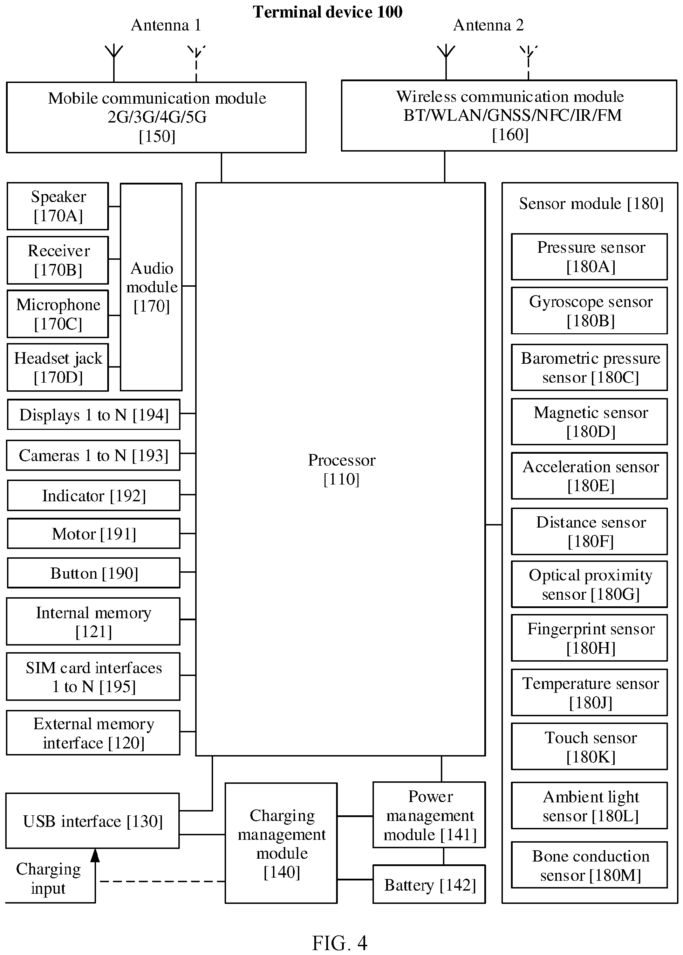

**FIG. 4** **shows an example of the structure of the terminal device 100 according to an embodiment of this application.**

As shown in FIG. 4, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface, thereby implementing a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 and the camera 193 communicate with each other through the CSI interface, to implement a shooting function of the terminal device 100. The processor 110 and the display 194 communicate through a DSI interface to implement a display function of the terminal device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type C interface, or the like. The USB interface 130 may be configured to connect to a charger to charge the terminal device 100, or may be configured to transmit data between the terminal device 100 and a peripheral device, or may be configured to connect to a headset for playing audio through the headset. The interface may be further configured to connect to another terminal device such as an AR device.

It may be understood that an interface connection relationship between the modules shown in this embodiment of the present invention is merely an example for description, and does not constitute a limitation on the structure of the terminal device 100. In some other embodiments of this application, the terminal device 100 may alternatively use an interface connection mode that is different from those in the foregoing embodiments, or use a combination of a plurality of interface connection modes.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 can receive a wireless charging input by using a wireless charging coil of the terminal device 100. The charging management module 140 supplies power to the terminal device 100 through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the terminal device 100, including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology and that is applied to the terminal device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device 100 is coupled to the mobile communication module 150, and the antenna 2 is coupled to the wireless communication module 160, so that the terminal device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device 100 may include one or N displays 194, where N is a positive integer greater than 1.

The terminal device 100 may implement a shooting function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera by using a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a still image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transform or the like on energy of the frequency.

The video codec is configured to compress or decompress a digital video. The terminal device 100 may support one or more types of video codecs. In this way, the terminal device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. With the NPU, the terminal device 100 can implement intelligent cognition and other application such as image recognition, face recognition, voice recognition, and text understanding.

The external memory interface 120 may be configured to connect to an external memory card, for example, a micro SD card, to extend a storage capability of the terminal device 100. The external memory card communicates with the processor 110 through the external memory interface 120, to implement a data storage function. For example, files such as music and videos are stored in the external storage card.

The internal memory 121 may be configured to store computer-executable program code, where the executable program code includes instructions. The processor 110 performs various function applications and data processing of the terminal device 100 by running the instructions stored in the internal memory 121. The internal memory 121 may include a program storage area and a data storage area. The program storage area may store an operating system, an application required for at least one function (such as a sound playing function and an image display function), and the like. The data storage area may store data (such as audio data and a phone book) created during use of the terminal device 100, and the like. In addition, the internal memory 121 may include a high-speed random access memory, or may include a nonvolatile memory, for example, at least one magnetic disk storage device, a flash memory, or a universal flash storage (universal flash storage, UFS).

The terminal device 100 can implement audio functions (such as music playing and sound recording) by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The terminal device 100 can listen to music or answer a handsfree call by using the speaker 170A.

The receiver 170B, also referred to as an "earpiece", is configured to convert an electrical audio signal into a sound signal. When the terminal device 100 receives a call or a voice message, the receiver 170B can be placed close to an ear to receive the voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. The terminal device 100 may be provided with at least one microphone 170C. In some other embodiments, two microphones 170C may be disposed in the terminal device 100, to collect a sound signal and implement a noise reduction function. In some other embodiments, three, four, or more microphones 170C may be alternatively disposed in the terminal device 100, to collect a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure strength based on a capacitance change. When a touch operation is performed on the display 194, the terminal device 100 detects a touch operation intensity based on the pressure sensor 180A. The terminal device 100 can further calculate a touch position based on the detection signal of the pressure sensor 180A. In some embodiments, touch operations that are performed at a same touch position but have different touch operation intensity may correspond to different operation instructions. For example, when a touch operation whose touch operation intensity is lower than a first pressure threshold is performed on a messaging application icon, an instruction for viewing an SMS message is performed. When a touch operation whose touch operation intensity is higher than or equal to the first pressure threshold is performed on the messaging application icon, an instruction for creating a new SMS message is performed.

The gyroscope sensor 180B may be configured to determine a movement posture of the terminal device 100. In some embodiments, the gyroscope sensor 180B may be configured to determine angular velocities of the terminal device 100 around three axes (that is, x, y, and z axes). The gyroscope sensor 180B may be configured to implement image stabilization during shooting. For example, when the shutter is pressed, the gyroscope sensor 180B detects a shake angle of the terminal device 100, calculates a distance that a lens module needs to compensate based on the angle, and allows the lens to counteract the shake of the terminal device 100 through reverse movement to implement image stabilization. The gyroscope sensor 180B may also be used in a navigation scenario and a somatic game scenario.

The barometric pressure sensor 180C is configured to measure barometric pressure. In some embodiments, the terminal device 100 calculates an altitude based on a barometric pressure value measured by the barometric pressure sensor 180C, to assist in positioning and navigation.

The magnetic sensor 180D includes a Hall sensor. The terminal device 100 can use the magnetic sensor 180D to detect opening and closing of a flip holster. In some embodiments, when the terminal device 100 is a flip phone, the terminal device 100 can detect opening and closing of a flip based on the magnetic sensor 180D. Further, a feature such as automatic unlocking of the flip cover is set based on a detected opening or closing state of the leather case or a detected opening or closing state of the flip cover.

The acceleration sensor 180E can detect magnitudes of acceleration of the terminal device 100 in various directions (generally three axes). When the terminal device 100 is still, a gravity and a direction may be detected. The acceleration sensor 180E may be further configured to identify the posture of the terminal device 100, and be used in applications such as switching between a landscape screen and a portrait screen, and a pedometer.

The distance sensor 180F is configured to measure a distance. The terminal device 100 may measure a distance by using infrared or laser. In some embodiments, in a shooting scenario, the terminal device 100 can use the distance sensor 180F to measure a distance to implement quick focusing.

The optical proximity sensor 180G may include, for example, a light-emitting diode (LED) and an optical detector such as a photodiode. The light emitting diode may be an infrared light emitting diode. The terminal device 100 emits infrared light outward by using the light-emitting diode. The terminal device 100 uses the photodiode to detect infrared reflected light from a nearby object. When sufficient reflected light is detected, it can be determined that there is an object near the terminal device 100. When insufficient reflected light is detected, the terminal device 100 can determine that there is no object near the terminal device 100. The terminal device 100 can use the optical proximity sensor 180G to detect that the user holds the terminal device 100 close to the ear, to automatically turn off the screen to save power. The optical proximity sensor 180G may also be used in a holster mode or a pocket mode to automatically perform screen unlocking or locking.

The ambient light sensor 180L is configured to sense ambient light brightness. The terminal device 100 can adaptively adjust luminance of the display 194 based on the sensed luminance of the ambient light. The ambient light sensor 180L may also be configured to automatically adjust white balance during shooting. The ambient light sensor 180L can further cooperate with the optical proximity sensor 180G to detect whether the terminal device 100 is in a pocket, to prevent accidental touch.

The fingerprint sensor 180H is configured to collect a fingerprint. The terminal device 100 can use the collected fingerprint characteristics to implement fingerprint-based unlocking, application lock accessing, fingerprint-based shooting, fingerprint-based incoming call receiving, and the like.

The temperature sensor 180J is configured to detect a temperature. In some embodiments, the terminal device 100 executes a temperature processing policy based on the temperature detected by the temperature sensor 180J. For example, when a temperature reported by the temperature sensor 180J exceeds a threshold, the terminal device 100 degrades performance of a processor located near the temperature sensor 180J, to reduce power consumption and implement thermal protection. In some other embodiments, when the temperature is lower than another threshold, the terminal device 100 heats the battery 142, to avoid abnormal shutdown of the terminal device 100 due to a low temperature. In some other embodiments, when the temperature is lower than still another threshold, the terminal device 100 boosts an output voltage of the battery 142, to avoid abnormal shutdown due to a low temperature.

The touch sensor 180K is also referred to as a touch panel. The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the terminal device 100, which is different from the position of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 can receive a key input, and generate a key signal input related to user setting and function control of the terminal device 100.

The motor 191 may generate a vibration prompt. The motor 191 may be configured to provide an incoming call vibration prompt or a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195 to implement contact and separation from the terminal device 100. The terminal device 100 can support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The terminal device 100 interacts with a network by using the SIM card, to implement functions such as making a call and data communication. In some embodiments, the terminal device 100 uses an eSIM, that is, an embedded SIM card. The eSIM card can be embedded in the terminal device 100 and cannot be separated from the terminal device 100.

It should be understood that the terminal device 100 shown in FIG. 4 is merely an example, and the terminal device 100 may have more or fewer components than those shown in FIG. 4, two or more components may be combined, or there may be different component configurations. The various components shown in FIG. 4 may be implemented in hardware including one or more signal processing circuits and/or application-specific integrated circuits, software, or a combination thereof.

The following describes a structure of a radio access controller 200 according to an embodiment of this application.

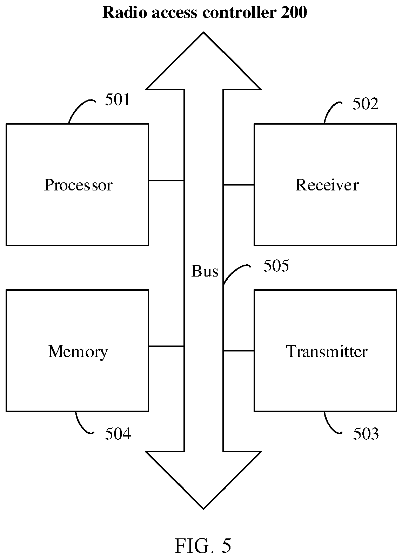

**FIG. 5** **shows an example of a structure of a radio access controller according to an embodiment of this application.**

As shown in FIG. 5, the radio access controller 200 may include a processor 501, a receiver 502, a transmitter 503, a memory 504, and a bus 505. The processor 501, the receiver 502, the transmitter 503, and the memory 504 are connected to each other through the bus 505. The processor 501 includes one or more processing cores. The processor 501 runs a software program and a module, to perform various function applications and process information. The receiver 502 and the transmitter 503 may be implemented as a communication component, and the communication component may be a baseband chip. The memory 504 may be configured to store at least one program instruction. The processor 501 is configured to execute the at least one program instruction, to implement the technical solution in the foregoing embodiment.

The processor 501 may be configured to run at least one program instruction stored in the memory 504, to perform the following operations:
saving and recording MAC address information provided by the terminal device 100, and determining that a MAC address required by the terminal device 100 for connecting to secondary Wi-Fi is recorded, to provide a password-free access channel for the terminal device 100; and
generating cookie information according to the MAC address information and a keepalive time that are provided by the terminal device 100, and determining that the cookie information is valid, to provide a password-free access channel for the terminal device 100.

The receiver 502 may be configured to receive information sent by the terminal device 100 and radio access devices (for example, the radio access device 300 and the radio access device 400). For example, the receiver 502 may be configured to receive the MAC address information sent by the terminal device 100, or an SSID and MAC address information that are sent by the radio access device.

The transmitter 503 may be configured to send information to the terminal device 100 and the radio access devices (for example, the radio access device 300 and the radio access device 400). For example, the transmitter 503 may be configured to send dual connectivity information or cookie information to the terminal device 100. For another example, the transmitter 503 may be configured to send MAC address information of the terminal device 100 to the radio access device.

The memory 504 may be configured to store the MAC address information of the terminal device 100 and the information (including the SSID and the MAC address) about the radio access device.

For more details about functions and operating principles of the radio access controller 200, refer to related content in the foregoing embodiments. Details are not described herein again.

The following describes a structure of a radio access device according to an embodiment of this application.

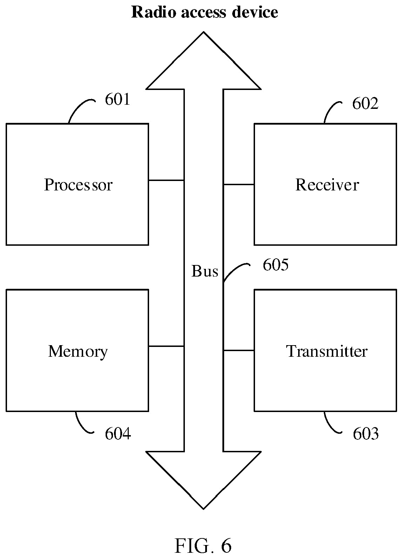

**FIG. 6** **shows an example of a structure of a radio access device according to an embodiment of this application.** The radio access device may be a radio access device 300 or a radio access device 400.

As shown in FIG. 6, the radio access device may include a processor 601, a receiver 602, a transmitter 603, a memory 604, and a bus 605. The processor 601, the receiver 602, the transmitter 603, and the memory 604 are connected to each other through the bus 605. The processor 601 includes one or more processing cores. The processor 601 runs a software program and a module, to perform various function applications and process information. The receiver 602 and the transmitter 603 may be implemented as a communication component, and the communication component may be a baseband chip. The memory 604 may be configured to store at least one program instruction. The processor 601 is configured to execute the at least one program instruction, to implement the technical solution in the foregoing embodiment.

The processor 601 may be configured to run at least one program instruction stored in the memory 604, to perform the following operations:
parsing cookie information of the terminal device 100 to determine that the cookie information is valid, so that the terminal device 100 can access the radio access device in a password-free manner.

The receiver 602 may be configured to receive information sent by the terminal device 100 and the radio access controller 200. For example, the receiver 602 may be configured to receive cookie information sent by the terminal device 100, or MAC address information of the terminal device 100 sent by the radio access controller 200.

The transmitter 603 may be configured to send information to the radio access controller 200. For example, the transmitter 603 may be configured to send information (including an SSID and a MAC address) of the radio access device to the radio access controller 200.

The memory 604 may be configured to store MAC address information of the terminal device 100.

For more details about functions and operating principles of the foregoing radio access device, refer to related content in the foregoing embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a nonvolatile memory such as a hard disk drive (hard disk drive, HDD) or a solid-state drive (solid-state drive, SSD), or may be a volatile memory (volatile memory) such as a random-access memory (random-access memory, RAM). The memory is any other medium that can carry or store expected program code in a form of an instruction or a data structure and that can be accessed by a computer, but is not limited thereto.

The memory in this embodiment of this application may alternatively be a circuit or any other apparatus that can implement a storage function, and is configured to store the program instructions and/or the data. All or some of the methods provided in embodiments of this application may be performed by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (Digital Subscriber Line, DSL)) or a wireless manner (for example, infrared, radio, and microwave). The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A Wi-Fi access method, applied to a communication system, wherein the communication system comprises a terminal device and network devices, the network devices comprise a radio access controller, a first radio access device, a second radio access device, and a third radio access device, and the method comprises:
establishing, by the terminal device, a first Wi-Fi connection to the first radio access device;
obtaining, by the terminal device through the first Wi-Fi connection, dual connectivity information sent by the network devices;
sending, by the terminal device, first verification information to the network devices through the first Wi-Fi connection;
sending, by the terminal device to the network devices through the first Wi-Fi connection, a request for establishing a second Wi-Fi connection, wherein the request carries the first verification information;
establishing, by the terminal device, the second Wi-Fi connection to the second radio access device;
when a first condition is met, sending, by the terminal device to the network devices, a request for establishing a third Wi-Fi connection, wherein the request carries the first verification information; and
when the first verification information is recorded by the network devices, accessing, by the terminal device, the third radio access device in a password-free manner, and establishing the third Wi-Fi connection to the third radio access device, wherein
the first Wi-Fi connection is a connection on a first Wi-Fi frequency band, and the second Wi-Fi connection and the third Wi-Fi connection are connections on a second Wi-Fi frequency band.

2. The method according to claim 1, wherein the first verification information is used to establish a connection on the second Wi-Fi frequency band.

3. The method according to claim 1 or 2, wherein the first radio access device is the same as or different from the second radio access device.

4. The method according to any one of claims 1 to 3, wherein the sending, by the terminal device to the network devices, a request for establishing a third Wi-Fi connection specifically comprises:
sending, by the terminal device to the radio access controller, the request for establishing the third Wi-Fi connection.

5. The method according to any one of claims 1 to 3, wherein the sending, by the terminal device to the network devices, a request for establishing a third Wi-Fi connection specifically comprises:
sending, by the terminal device to the third radio access device, the request for establishing the third Wi-Fi connection.

6. The method according to claim 4, wherein that the first verification information is recorded by the network devices specifically comprises:
the first verification information is recorded by the radio access controller.

7. The method according to claim 5, wherein that the first verification information is recorded by the network devices specifically comprises:
the first verification information is recorded by the third radio access device.

8. The method according to any one of claims 1 to 7, wherein the method further comprises:
receiving, by the terminal device, a first time sent by the network devices, and the accessing, by the terminal device, the third radio access device in a password-free manner specifically comprises: accessing, by the terminal device, the third radio access device in a password-free manner within a range of the first time.

9. The method according to any one of claims 1 to 8, wherein before the establishing, by the terminal device, the second Wi-Fi connection to the second radio access device, the method further comprises:
when the first verification information is recorded by the network devices, accessing, by the terminal device, the second radio access device in a password-free manner.

10. The method according to any one of claims 1 to 9, wherein before the establishing, by the terminal device, the second Wi-Fi connection to the second radio access device, the method further comprises:
determining, by the terminal device, that an SSID of the second radio access device is comprised in the dual connectivity information.

11. The method according to any one of claims 1 to 10, wherein before the establishing, by the terminal device, the third Wi-Fi connection to the third radio access device, the method further comprises:
determining, by the terminal device, that an SSID of the third radio access device is comprised in the dual connectivity information.

12. The method according to any one of claims 1 to 11, wherein that a first condition is met specifically comprises:
the terminal device detects that the terminal device enters a Wi-Fi coverage area of the third radio access device; or
the terminal device detects that a Wi-Fi signal of the third radio access device is relatively good.

13. The method according to any one of claims 1 to 12, wherein the first verification information is a MAC address of the terminal device.

14. A Wi-Fi access method, applied to a communication system, wherein the communication system comprises a terminal device and network devices, the network devices comprise a radio access controller, a first radio access device, a second radio access device, and a third radio access device, a first Wi-Fi connection is established between the terminal device and the first radio access device, and the method comprises:
sending, by the network devices, dual connectivity information to the terminal device through the first Wi-Fi connection, wherein a second Wi-Fi connection is further established between the terminal device and the second radio access device;
receiving, by the network devices through the first Wi-Fi connection, first verification information sent by the terminal device;
receiving, by the network devices, a request for establishing a third Wi-Fi connection that is sent by the terminal device, wherein the request carries the first verification information, and the request for establishing the third Wi-Fi connection is sent when a first condition is met; and
when the first verification information is recorded by the network devices, allowing, by the network devices, the terminal device to access the third access device in a password-free manner, wherein
the first Wi-Fi connection is a connection on a first Wi-Fi frequency band, and the second Wi-Fi connection and the third Wi-Fi connection are connections on a second Wi-Fi frequency band.

15. The method according to claim 14, wherein the first verification information is used to establish a connection on the second Wi-Fi frequency band.

16. The method according to claim 14 or 15, wherein the first radio access device is the same as or different from the second radio access device.

17. The method according to any one of claims 14 to 16, wherein the receiving, by the network devices, a request for establishing a third Wi-Fi connection that is sent by the terminal device specifically comprises:
receiving, by the radio access controller, the request for establishing the third Wi-Fi connection that is sent by the terminal.

18. The method according to any one of claims 14 to 16, wherein the receiving, by the network devices, a request for establishing a third Wi-Fi connection that is sent by the terminal device specifically comprises:
receiving, by the third radio access device, the request for establishing the third Wi-Fi connection that is sent by the terminal device.

19. The method according to claim 17, wherein that the first verification information is recorded by the network devices specifically comprises:
the first verification information is recorded by the radio access controller.

20. The method according to claim 18, wherein that the first verification information is recorded by the network devices specifically comprises:
the first verification information is recorded by the third radio access device.

21. The method according to any one of claims 14 to 20, wherein the method further comprises:
sending, by the network devices, a first time to the terminal device, and the allowing, by the network devices, the terminal device to access the third access device in a password-free manner specifically comprises: allowing, by the network devices, the terminal device to access the third radio access device in a password-free manner within a range of the first time.

22. The method according to any one of claims 14 to 21, wherein the dual connectivity information comprises an SSID of the second radio access device.

23. The method according to any one of claims 14 to 22, wherein the dual connectivity information comprises an SSID of the third radio access device.

24. The method according to any one of claims 14 to 23, wherein that a first condition is met specifically comprises:
the terminal device detects that the terminal device enters a Wi-Fi coverage area of the third radio access device; or
the terminal device detects that a Wi-Fi signal of the third radio access device is relatively good.

25. The method according to any one of claims 14 to 24, wherein the first verification information is a MAC address of the terminal device.

26. A terminal device, comprising one or more processors and one or more memories, wherein the one or more memories are coupled to the one or more processors, the one or more memories are configured to store computer program code, the computer program code comprises computer instructions, and when the one or more processors execute the computer instructions, the terminal device is enabled to perform the method according to any one of claims 1 to 13.

27. A network device, comprising one or more processors and one or more memories, wherein the one or more memories are coupled to the one or more processors, the one or more memories are configured to store computer program code, the computer program code comprises computer instructions, and when the one or more processors execute the computer instructions, the network device is enabled to perform the method according to any one of claims 14 to 25.

28. A computer storage medium, wherein the computer storage medium stores a computer program, the computer program comprises program instructions, and when the program instructions are executed by a processor, the method according to any one of claims 1 to 13 is performed.

29. A computer storage medium, wherein the computer storage medium stores a computer program, the computer program comprises program instructions, and when the program instructions are executed by a processor, the method according to any one of claims 14 to 25 is performed.
